# EUROPÄISCHE PATENTSCHRIFT

(11) **EP 0 631 897 B1**
(45) Veröffentlichungstag und Bekanntmachung des Hinweises auf die Patenterteilung: **15.10.1997**
(21) Anmeldenummer: 94107953.5
(22) Anmeldetag: 20.05.1994
(51) Int. Cl.: B60K 26/04, F02D 41/04, F02D 41/14, F02D 11/10

(54) **nerfahren und Vorrichtung zur Steuerung einer Antreibseinheit eines Fahrzeugs**
Method of and device for controlling a drive unit of a vehicle
Procédé et dispositif pour commander une unité de propulsion d'un véhicule

(30) Priorität: 26.06.1993 DE 4321333
(43) Veröffentlichungstag der Anmeldung: 04.01.1995
(73) Patentinhaber: ROBERT BOSCH GMBH, 70442 Stuttgart (DE)
(72) Erfinder: Streib, Martin, Dr.-Phys., D-71665 Vaihingen (DE); Sorg, Dieter, Dipl.-Ing. (FH), D-75050 Gemmingen (DE)

(56) Entgegenhaltungen:
- EP-A- 0 155 993
- EP-A- 0 279 908
- DE-A- 3 714 201
- DE-A- 3 738 719
- GB-A- 2 117 136

## Beschreibung

### Stand der Technik

Die Erfindung betrifft ein Verfahren und eine Vorrichtung zur Steuerung einer Antriebseinheit eines Fahrzeugs gemäß den Oberbegriffen der unabhängigen Patentansprüche.

Bei der Steuerung von Antriebseinheiten für Fahrzeuge treten grundsätzlich zwei verschiedene Betriebsphasen auf. Zum einen die Schubphase, in der die Antriebseinheit vom Fahrzeugantrieb geschoben wird, zum anderen die Zugphase, in der die Antriebseinheit Leistung an den Antrieb des Fahrzeugs oder im Leerlauf die durch innere Reibung der Antriebseinheit aufzuwendende Leistung abgibt. Wird ein herkömmliches Fahrzeug aus der Schubphase heraus durch Betätigen des Fahrpedals und damit der Drosselklappe heraus beschleunigt, so entsteht dadurch eine plötzliche Erhöhung der Motorleistung, was wiederum ein mehr oder weniger großes Ruckeln oder Schwingen des Triebsstrangs bzw. des Fahrzeugs infolge des hervorgerufenen Drehmomentensprungs zur Folge haben kann. Dies läßt sich durch die Simulation des Triebstrangs (Kurbelwelle, Getriebe, Abtriebswelle) als Torsionsfeder erklären. Im Schubbetrieb, wenn der Antrieb über den Triebstrang Leistung an die Antriebseinheit abgibt, ist der Triebstrang in diese Richtung (Schubrichtung) vorgespannt. Beim Übergang in den Zugbetrieb, in dem die Antriebseinheit an den Antriebsstrang Leistung abgibt, wird der in Schubrichtung vorgespannte Triebstrang entspannt, die im Triebstrang enthaltene Lose überwunden und der Triebstrang in die andere Richtung (Zugrichtung) vorgespannt. Dies ist Ursache dafür, daß beim Übergang vom Schub- in Zugbetrieb, insbesondere beim großem Beschleunigungswunsch, der Triebstrang zu Schwingungen angeregt wird, welche sich in einem Ruckeln des Fahrzeugs beim Beschleunigen aus der Schubphase heraus bemerkbar machen, und Fahrkomfort und Fahrbarkeit des Fahrzeugs erheblich beeinträchtigen können.

Aus der EP-A 279 908 ist ein Verfahren zur Steuerung einer Antriebseinheit eines Fahrzeugs bekannt, welches über ein Stellelement die Leistung der Antriebseinheit beeinflußt, dieses Stellelement auf der Basis des Fahrerwunsches eingestellt wird und wobei beim Übergang vom Schubbetrieb in den Zugbetrieb die Ausführung des Fahrerwunsches zur Einstellung der Leistung verzögert erfolgt. Dabei wird die Verzögerung vorgenommen, wenn die Fahrerwunschänderung einen vorgegebenen Wert überschreitet. Da der Antriebsstrang nicht in die Betrachtung der Steuerung des Stellelements beim Übergang vom Schub- in den Zugbetrieb einbezogen wird, wird durch die bekannte Maßnahme nicht in allen Betriebszuständen der Fahrkomfort und die Fahrbarkeit des Fahrzeugs beim Übergang von der Schub- in die Zugphase verbessert. Es können weiterhin Schwingungen im Triebstrang auftreten.

Das Entsprechende gilt für die DE-A1 37 38 719, die ein elektronisches Gaspedalsystem zeigt, bei welchem beim Übergang vom Schub- in den Zugbetrieb der Fahrerwunsch im Bereich des Nulldurchgangs des Drehmomentenverlaufs der Brennkraftmaschine verzögert ausgeführt wird. Auch hier wird der Triebstrang selbst nicht in die Betrachtung mit einbezogen.

Es ist daher Aufgabe der Erfindung, Maßnahmen anzugeben, mit welchen der Fahrkomfort und die Fahrbarkeit eines Fahrzeugs beim Übergang von der Schub- in die Zugphase verbessert wird.

Dies wird durch die kennzeichnenden Merkmale der unabhängigen Patentansprüche erreicht.

Aus der Veröffentlichung "elektronische Motorsteuerung für Kraftfahrzeuge" von Gerhard Kolberg, Motortechnische Zeitschrift, 46. Jahrgang, Heft 4/1985, ist ein elektronisches Gaspedalsystem bekannt, bei welchem die Motorleistung durch Einstellen einer die Luftzufuhr zur einer Brennkraftmaschine beeinflussenden Drosselklappe auf der Basis des durch die Auslenkung des Fahrpedals erfaßten Fahrerwunsches im Rahmen einer Lageregelung gesteuert wird. Maßnahmen, welche den Übergangs von der Schub- in die Zugphase betreffen, werden nicht vorgeschlagen.

### Vorteile der Erfindung

Durch die erfindungsgemäße Vorgehensweise wird der Übergang von der Schub- in die Zugphase, insbesondere bei einer Beschleunigung durch den Fahrer, wesentlich verbessert.

Insbesondere ist vorteilhaft, daß keine Schwingungen im Triebstrang und somit kein Ruckeln auftritt.

Ferner ist vorteilhaft, im Gegensatz zu anderen Maßnahmen wie z.B. Ruckeldämpfern, welche bereits entstehenden Schwingungen entgegenwirken, daß bereits das Entstehen von Schwingungen vermieden wird.

Besonders vorteilhaft ist die Begrenzung des Fahrerwunschgradientens, weil dadurch bei Fahrpedalbetätigungen aus der Schubphase heraus, die erfahrungsgemäß zu keiner Schwingungsanregung führen, die Dynamik des Steuersystems erhalten bleibt.

Durch eine gangstufenabhängige Begrenzung der Dynamik des Fahrerwunsches werden Schwingungen in jeder Gangstufe wirksam vermieden, ohne daß unnötigerweise Dynamik verloren geht.

Negative Einflüsse auf die Abgaszusammensetzung werden ebenfalls vermieden.

Besonders vorteilhaft ist, daß die Verzögerung der Ausführung des Fahrerwunsches lediglich bis zur Erkennung des tatsächlich vorhandenen Kraftschlusses, das heißt bis zum tatsächlichen Eintritt der Zugphase, durchgeführt wird, so daß lediglich der schwingungsempfindliche Bereich vermieden wird. Danach kann in vorteilhafter Weise unter Ausnützung der Dynamik des Systems der Fahrerwunsch unbegrenzt ausgeführt werden, sobald der Triebstrang in Zugrichtung vorgespannt ist.

Weitere Vorteile ergeben sich aus der nachfolgenden Beschreibung von Ausführungsbeispielen sowie aus den abhängigen Ansprüchen.

### Zeichnung

Die erfindungsgemäße Vorgehensweise wird nachstehend anhand der in der Zeichnung dargestellten Ausführungsformen näher erläutert. Dabei zeigt Figur 1 ein Übersichtsblockschaltbild einer Vorrichtung zur Durchführung der erfindungsgemäßen Vorgehensweise, während in Figur 2 anhand von Signalverläufen die Wirkung der erfindungsgemäßen Vorgehensweise skizziert ist. In Figur 3 schließlich ist eine Realisierungsmöglichkeit der erfindungsgemäßen Vorgehensweise in Form eines Rechenprogramms als Flußdiagramm dargestellt.

### Beschreibung von Ausführungsbeispielen

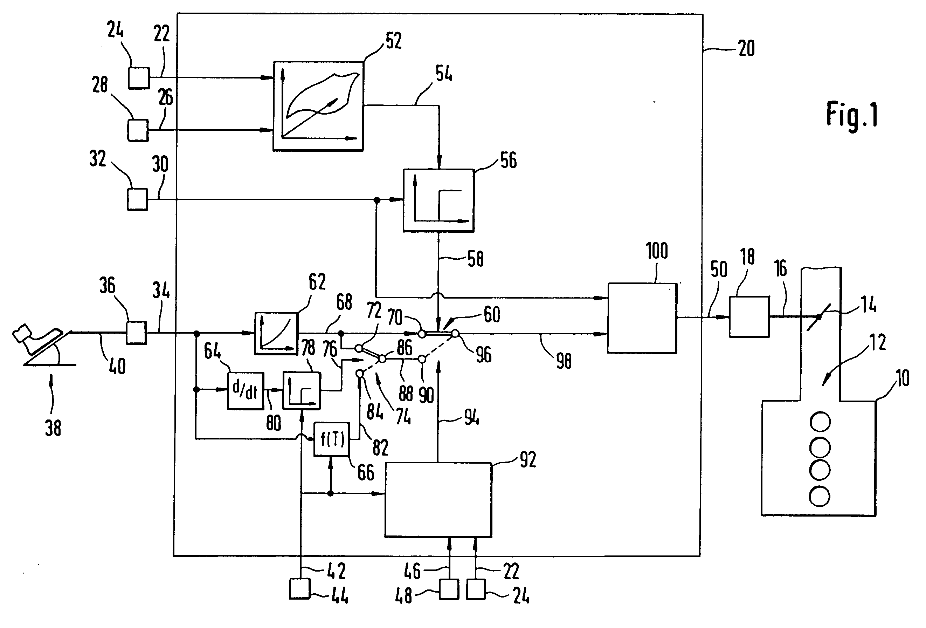

Figur 1 zeigt ein Übersichtsblockschaltbild einer Vorrichtung zur Steuerung der Antriebseinheit eines Fahrzeugs, bei der im Rahmen eines ersten Ausführungsbeispiels die erfindungsgemäße Vorgehens-weise angewendet werden kann. Dort ist mit 10 eine Brennkraftmaschine bezeichnet, welche unter anderem über ein Luftansaugsystem 12 und eine darin befindliche Drosselklappe 14 verfügt. Die Drosselklappe 14 ist über eine mechanische Verbindung 16 mit einem Stellmotor 18 verbunden und bildet das Leistungsstellelement der Brennkraftmaschine. Ferner ist eine Steuereinheit 20 dargestellt, welche über folgende Eingangsleitungen verfügt: Eine erste Eingangsleitung 22 von einer Meßeinrichtung 24 zur Erfassung der Motordrehzahl; eine zweite Eingangsleitung 26 von einer Meßeinrichtung 28 zur Erfassung der Motortemperatur; eine Eingangsleitung 30 von einer Meßeinrichtung 32 zur Erfassung der Position des Leistungsstellelements, insbesondere der Drosselklappe 14; eine weitere Eingangsleitung 34 von einer Meßeinrichtung 36 zur Erfassung der Position eines vom Fahrer betätigbaren Bedienelements 38, insbesondere eines Fahrpedals, welches über eine mechanische Verbindung 40 mit der Meßeinrichtung 36 verbunden ist; eine Eingangsleitung 42 von einer Meßeinrichtung 44 zur Erfassung der eingelegten Gangstufe; eine Eingangsleitung 46 von einer Meßeinrichtung 48 zur Erfassung der Raddrehzahl eines angetriebenen Rades. Eine Ausgangsleitung 50 der Steuereinheit 20 führt auf den Stellmotor 18 des Leistungsstellelements.

Die Eingangsleitungen 22 und 26 führen auf ein Element 52, welches eine Kennlinie oder ein Kennfeld enthält und dessen Ausgangsleitung 54 auf ein Vergleichselement 56 führt. Diesem wird als weitere Eingangsleitung die Leitung 30 zugeführt. Die Ausgangsleitung 58 des Vergleichselements 56 führt auf ein erstes Schaltelement 60. Die Eingangsleitung 34 führt auf ein Kennlinien- bzw. Kennfeldelement 62, auf ein Differenzierelement 64 sowie auf einen Funktionsgenerator 66. Die Ausgangsleitung 68 des Kennlinienelements 62 führt auf den Pol 70 des ersten Schaltelements 60 sowie auf den Pol 72 eines zweiten Schaltelements 74. Dieses wird über die Leitung 76, welche Ausgangsleitung eines Vergleichselements 78 ist, betätigt. Die Ausgangsleitung 80 des Differenzierelements 64 führt auf das Vergleichselement 78. Die Ausgangsleitung 82 des Funktionsgenerators 66 führt auf den zweiten Pol 84 des Schaltelements 74, dessen dritter Pol 86 über die Leitung 88 mit dem zweiten Pol 90 des Schaltelements 60 verbunden ist. Das Schaltelement 74 schaltet zwischen den Polen 72 und 84 um. Die Eingangsleitung 42 führt einerseits auf das Vergleichselement 78, den Funktionsgenerator 66 sowie ein Berechnungselement 92. Die Ausgangsleitung 94 des Berechnungselements 92 führt zum ersten Schaltelement 60 zu dessen Betätigung. Dem Berechnungselement 92 sind die Eingangsleitungen 46 und 22 zugeführt. Der dritte Pol 96 des Schaltelements 60 ist über die Leitung 98 mit einer Regeleinheit 100 verbunden, der außerdem die Leitung 30 zugeführt ist. Das Schaltelement 60 schaltet zwischen den Polen 70 und 90 um. Die Ausgangsleitung des Elements 100 stellt die Ausgangsleitung 50 der Steuereinheit 20 dar.

Im normalen Fahrbetrieb des Fahrzeugs wird über die Meßeinrichtung 36 auf der Basis der Stellung des Fahrpedals 38 der Fahrerwunsch ermittelt, welcher im Element 62 über vorgegebene Kennlinien in einen Sollwert für die Einstellung des Leistungsstellelements umgesetzt und über den im Normalbetrieb geschlossenen Schalter 60 (wie in Fig. 1 gezeigt) an den Regler 100 abgegeben wird. Dort wird der Sollwert mit dem von der Meßeinrichtung 32 erfaßten Istwert der Drosselklappenstellung verglichen und entsprechend einer vorgegebenen Regelungsstrategie, z.B. PID-Regelung, ein Ausgangssignal abhängig von der Differenz zwischen Soll- und Istwert gebildet und über die Leitung 50 zur Einstellung des Leistungsstellelements im Sinne einer Annäherung des Istwertes an den Sollwert abgegeben. Zur Erkennung der Schubphase ist das Kennfeldelement 52 vorgesehen, in welchem ein sogenanntes Nullmomentenkennfeld abgelegt ist. Dieses ordnet jeder Kombination aus Motortemperatur und Motordrehzahl diejenige Drosselklappenstellung zu, die notwendig ist, um gerade die inneren Verluste von Motor und Triebstrang zu überwinden. Dabei ist qualitativ das Kennfeld derart vorgegeben, daß mit steigender Motortemperatur und Motordrehzahl die zugeordnete Drosselklappenstellung betragsmäßig kleiner wird. Unterschreitet die aktuelle Drosselklappenstellung den aus dem Kennfeld für den aktuellen Betriebspunkt entsprechenden Wert, so wird davon ausgegangen, daß das Fahrzeug sich im Schubbetrieb befindet. Dies wird durch Vergleich der aus dem Kennfeld ausgelesenen Werte im Vergleichselement 56 mit der tatsächlich gemessenen Drosselklappenstellung durchgeführt. Wird Schubbetrieb erkannt, so wird das Schaltelement 60 in die strichliert gezeigte Stellung umgelegt und die erfindungsgemäße Vorgehensweise aktiviert. Die Drosselklappenstellung wird auch während der Schubphase auf der Basis des Fahrerwunsches eingestellt (vgl. Schaltelement 74, welches in der mit durchgezogenen Linien gezeigten Stellung steht), lediglich beim Beschleunigen aus der Schubphase heraus kann die durch das Element 62 bestimmte Abhängigkeit modifiziert sein.

Während der Schubbetriebsphase wird im Differenzierelement 64 der Gradient der Fahrpedalstellung durch zeitliche Ableitung oder Differenzbildung zweier aufeinanderfolgender Meßwerte der Fahrpedalstellung bestimmt. Dieser wird über die Leitung 80 an das Vergleichselement 78 abgegeben, wo der Fahrpedalgradient mit einem vorgegebenen Schwellwert verglichen wird. Dieser Schwellwert ist vorzugsweise gangabhängig, da die obenerwähnten Schwingungen je nach Gangstufe bei unterschiedlichen Drehmomentensprüngen auftreten. Die Gangabhängigkeit ist durch die Leitung 42 symbolisiert, wobei die Ganginformation nicht nur extern vom Getriebe erfaßt, sondern auch in der Steuereinheit 20 selbst auf der Basis des Quotienten aus Motordrehzahl und Fahrgeschwindigkeit ermittelt werden kann. Qualitativ steigt der maximale Gradientenwert mit größerer Getriebeübersetzung an, so daß z.B. im 5. Gang eine betragsmäßig größere Fahrpedalstellungsänderung ausgeführt wird als im 1. Gang.

Überschreitet der gemessene Drehzahlgradient den vorgegebenen Schwellwert, so wird das Schaltelement 72 in die strichliert gezeigte Stellung umgelegt, wodurch der vom Kennfeld 62 ermittelte Vorgabewert seine Wirkung verliert und an dessen Stelle die vorzugsweise gangabhängig vom Generator 66 in Abhängigkeit der Fahrpedalstellung erzeugte zeitliche Rampe des Vorgabewerts zur Wirkung kommt. Dieser gemäß einer vorgegebenen Zeitfunktion gesteuerte Vorgabewert wird über die Schaltelemente 74 und 60 auf die Leitung 98 dem Regler zugeführt, worauf die Drosselklappe 14 entsprechend der zeitabhängig vorgegebenen Funktion verändert wird. Diese Rampe kann dabei in einem bevorzugten Ausführungsbeispiel linear sein, allerdings auch andere Kurvenverläufe, exponentielle, parabelförmige, stufenförmige, etc. aufweisen. Auch diese Rampenfunktion ist gangabhängig aus den vorstehenden Gründen, wobei bei größerer Übersetzung (z.B. 5. Gang) eine kleinere Verzögerung zu wählen ist, als bei kleinerer Übersetzung (z.B. 1. Gang).

Die geschilderte Situation tritt solange auf, bis Kraftschluß von Antriebseinheit auf das angetriebene Rad erkannt worden ist, das heißt bis der Triebstrang in Richtung Zug vorgespannt ist. Die Kraftschlußerkennung wird durch die Berechnungseinheit 92 durchgeführt, welche bei erkanntem Kraftschluß über die Leitung 94 das Schaltelement 60 in die durchgezogene Stellung zurückführt und somit den Normalbetrieb herstellt. Die Kraftschlußerkennung selbst wird auf der Basis der Raddrehzahl eines angetriebenen Rads und der Motordrehzahl unter Berücksichtigung der Gangstufe durchgeführt. Kraftschluß wird demnach erkannt, wenn infolge einer Motorbeschleunigung, das heißt einer Motordrehzahländerung, eine Radbeschleunigung, das heißt eine Änderung der Radgeschwindigkeit, meßbar ist, wobei ergänzend der Betrag der Änderungen ausgewertet und zueinander in Beziehung gesetzt wird, so daß Kraftschluß dann erkannt wird, wenn einem ermittelten Änderungsbetrag der Motordrehzahl ein entsprechender Änderungsbetrag der Raddrehzahl gegenüber steht.

Aus Sicherheitsgründen kann in einem bevorzugten Ausführungsbeispiel ferner dieser Kraftschlußerkennung eine Zeitbedingung überlagert sein, welche ebenfalls vom Berechnungselement 92 überprüft wird. Nach Ablauf dieser Zeit nach Erkennung der Schubphase und Umlegen des Schaltelements 60 wird über die Leitung 94 das Schaltelement 60 wieder in die ursprüngliche Lage zurückgelegt, ohne daß Kraftschluß erkannt worden ist. Diese überlagerte Zeitbedingung soll sicherstellen, daß eine Rückkehr in den Normalbetrieb auch bei defekter oder nicht erfolgreicher Kraftschlußerkennung möglich bleibt.

Zusammenfassend ist festzustellen, daß durch die erfindungsgemäße Vorgehensweise die Erkennung der Schubphase des Fahrzeugs anhand eines motortemperatur- und motordrehzahlabhängigen Kennfeldes auf der Basis der Drosselklappenstellungen ermöglicht wird und eine gangabhängige Begrenzung der Drosselklappendynamik gemäß einer Zeitfunktion, eine Verzögerung der Ausführung des Fahrerwunsches, solange aktiviert wird, bis der Kraftschluß wieder erkannt wird, daß heißt der Triebstrang in Richtung Zug vorgespannt ist. Die Begrenzung der Drosselklappendynamik durch Begrenzung der Fahrpedaländerung wird vorzugsweise dann eingeleitet, wenn die Fahrpedaländerung einen gangabhängigen Grenzwert überschritten hat und bleibt bis zur Kraftschlußerkennung oder bis zum Ablauf einer vorgegebenen Zeitspanne aktiv. Dadurch werden Schwingungen und Ruckeln im Triebstrang beim Übergang von der Schubphase in den Beschleunigungszustand des Fahrzeugs wirksam vermieden.

In Figur 1 ist die erfindungsgemäeßen Vorgehensweise anhand eines elektronischen Gaspedalssystems eines Ottomotors beschrieben. Die erfindungsgemäße Vorgehensweise kann in anderen Ausführungsbeispielen unter Erlangung der genannten Vorteile auch bei Dieselmotoren oder sogenannten kraftstoffgeführten Systemen angewendet werden, wo abhängig vom Fahrerwunsch die zuzumessende Kraftstoffmenge bestimmt wird. Ferner kann eine Anwendung auch in Verbindung mit Elektroantrieben unter Einstellung des Motorstromes vorteilhaft sein. Bei konventioellen Motorsteuerungen mit einer mechanischen Verbindung zwischen Fahrpedal und Drosselklappe kann die erfindungsgemäße Vorgehensweise der verzögerten Ausführung des Fahrerwunsches dadurch realsiert werden, daß ein Leerlaufstellelement oder eine in Reihe zur Hauptdrosselklappe angeordnete elektrisch betätigbare Zusatzklappe zuerst schlagartig in Richtung Schließen und dann einer vorgegebenen Zeitfunktion folgend in Richtung Öffnen gesteuert wird.

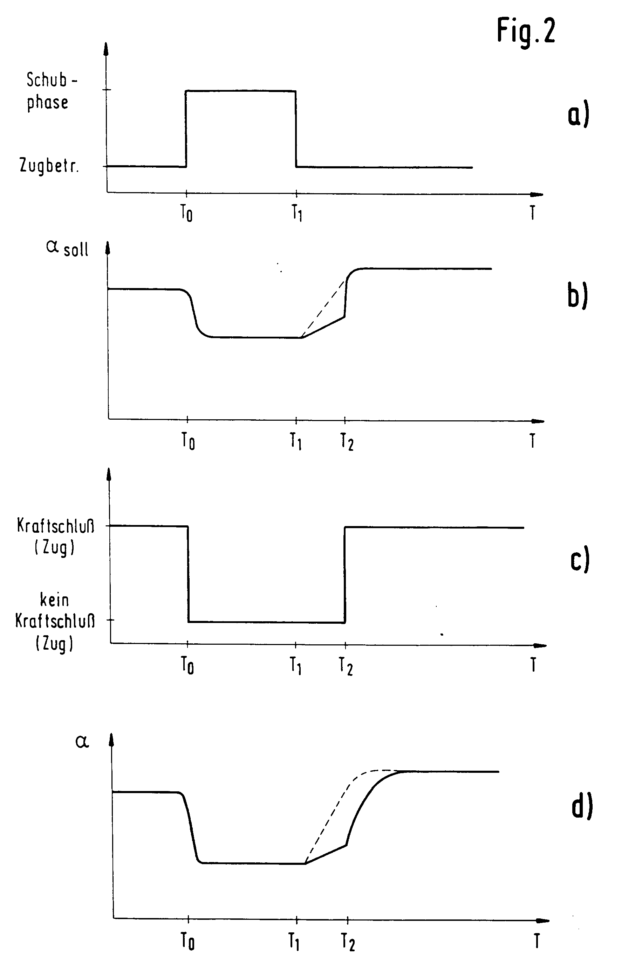

In Figur 2 ist die grundsätzliche Wirkung der erfindungsgemäßen Vorgehensweise anhand von Signalverläufen dargestellt. Dabei ist jeweils waagrecht die Zeit, senkrecht das entsprechende Signal aufgetragen. Figur 2a zeigt den Wechsel zwischen Schub- und Zugbetriebsphase. Es sei angenommen, daß sich das Fahrzeug im Zugbetrieb bewegt, zum Zeitpunkt T0 jedoch in den Schubbetrieb überwechselt, das heißt die Antriebseinheit vom Antrieb geschoben wird. Die Schubbetriebsphase dauere bis zum Zeitpunkt T1, zu dem der Fahrer durch Betätigen des Fahrpedals in den Zugbetrieb, insbesondere in den Beschleunigungszustand, überwechselt. In Figur 2b ist die dazugehörige Veränderung des Sollwertes der Leistungsstellelementestellung aufgezeigt. Zum Zeitpunkt T0 wird durch Entlasten des Fahrpedals durch den Fahrer die Sollstellung auf einen kleineren Wert zurückgeführt. Während der Schubbetriebsphase zwischen T0 und T1 soll dieser Wert gleichbleiben, während beim Beschleunigen, das heißt Betätigen des Fahrpedals zum Zeitpunkt T1 im Normalbetrieb eine Veränderung des Sollwertes zwischen T1 und T2 wie strichliert dargestellt die Folge wäre. Da zwischen T1 und T2 der Kraftschluß noch nicht vollständig hergestellt ist, und die Änderung der Fahrpedalstellung den vorgegebenen Grenzwert überschreitet, ist zwischen den Zeitpunkten T1 und T2 die erfindungsgemäße Vorgehensweise aktiv, die in einer zeitlichen Begrenzung der Sollwertänderung, d.h. Verzögerung oder Begrenzung der Ausführung des Fahrerwunsches, besteht. Dies ist durch die Gerade konstanter Steigung der durchgezogenen Linie zwischen den Zeitpunkten T1 und T2 in Figur 2b dargestellt. Nach Kraftschlußerkennung wird der ursprünglich vom Fahrer eingestellte Sollwert zur Weiterverarbeitung vorgegeben. Gemäß diesem Verhalten ergibt sich die Kraftschlußerkennung gemäß Figur 2c. Mit Erkennen der Schubphase zum Zeitpunkt T0 gilt der Kraftschluß im Sinne eines Zugbetriebs als nicht geschlossen, dies gilt auch noch über den Zeitpunkt T1 hinaus, zu dem der Fahrer die Schubphase durch Betätigen des Fahrpedals beendet. Zum Zeitpunkt T2 sei in der geschilderten Betriebssituation der Kraftschluß in Zugrichtung vorhanden, so daß das in Figur 2 skizzierte Signal eine entsprechende Zustandsänderung erfährt. Dies ist der Auslöser, die Begrenzung der Änderungsgeschwindigkeit des Sollwertes gemäß Figur 2b abzubrechen. In Figur 2d sind schließlich die tatsächlichen Stellungen der Drosselklappe, ausgehend vom Verlauf des Sollwertes in Figur 2b, aufgetragen. Zum Zeitpunkt T0 wird die Drosselklappe entsprechend dem Fahrerwunsch zurückgefahren, während zum Zeitpunkt T1 die Drosselklappe gemäß der strichlierten Linie verstellt werden würde, wenn der Fahrerwunsch ungehindert zur Wirkung käme. Durch die erfindungsgemäße Vorgehensweise ergibt sich jedoch zwischen den Zeitpunkten T1 und T2 eine begrenzte Verstellgeschwindigkeit der Drosselklappe gemäß der dargestellten linearen Geraden, während ab dem Zeitpunkt T2 ein schneller Anstieg mit großer Dynamik auf den vom Fahrer vorgegebenen Wert erfolgt.

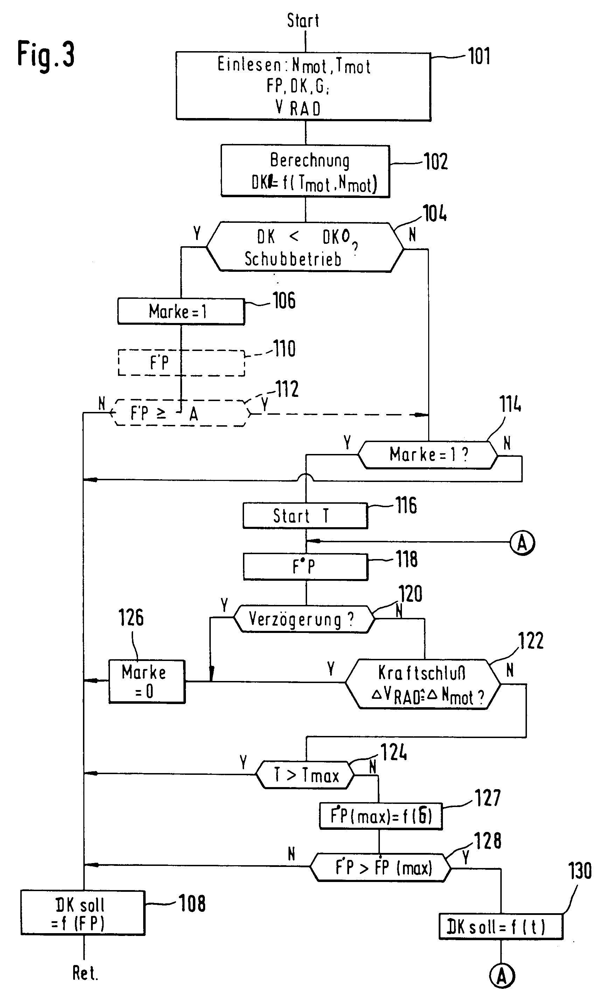

In Figur 3 ist ein Flußdiagramm skizziert als Beispiel einer Realisierung der erfindungsgemäßen Vorgehensweise in einem Rechenprogramm. Nach Start des Programmteils werden in einem ersten Schritt 101 die notwendigen Betriebsgrößen eingelesen: Motordrehzahl Nmot, Motortemperatur Tmot, Fahrpedalstellung FP, Drosselklappenstellung DK, Getriebeübersetzung G, Radgeschwindigkeit Vrad. Im darauffolgenden Schritt 102 wird aus dem Nullmomentenkennfeld der Nullmomentendrosselklappenwert DK0 als Funktion von Motortemperatur und Motordrehzahl ausgelesen und im darauffolgenden Abfrageschritt 104 der aktuell gemessene Drosselklappenstellungswert DK mit dem ermittelten Grenzwert DK0 verglichen. Unterschreitet der Drosselklappenistwert den vorgegebenen Grenzwert, so wird Schubbetriebsphase erkannt, und im Schritt 106 eine Marke auf den Wert 1 gesetzt. Danach wird im bevorzugten Ausführungsbeispiel nach Schritt 108 der Drosselklappensollwert DKsoll als Funktion des Fahrpedalwertes FP im Rahmen der normalen Pedalkennlinien festgelegt, der Programmteil beendet und zu gegebener Zeit wiederholt.

In einem zweiten vorteilhaften Ausführungsbeispiel wird nach dem Schritt 108 der strichliert gezeigte Schritt 110 eingefügt, indem der Fahrpedalgradient, das heißt die zeitliche Änderung des Fahrpedalwertes, durch Bildung der zeitlichen Ableitung oder durch Bildung der Differenz zwischen zwei aufeinanderfolgenden Meßwerten berechnet wird und im darauffolgenden Abfrageschritt 112 überprüft wird, ob eine Fahrpedalbetätigung im Sinne einer Beschleunigung stattgefunden hat, das heißt ob der Fahrpedalgradient einen vorbestimmten Grenzwert A überschritten hat. Ist dies nicht der Fall, folgt Schritt 108, im gegenteiligen Fall wird eine Beendigung des Schubbetriebs angenommen als alternatives Kriterium zur "Nein"-Entscheidung im Schritt 104, wenn die Drosselklappenstellung den "Nullmomentwert" überschreitet.

Wenn der erfaßte Drosselklappenwert gleich dem im Schritt 102 ausgelesenen Kennfeldwert ist oder diesen überschreitet, wird Zugbetrieb angenommen und ebenso wie bei einer Ja-Entscheidung im Schritt 111 mit dem Schritt 114 fortgefahren, indem die Marke überprüft wird, ob sie auf 1 gesetzt ist. Ist dies nicht der Fall, folgt Schritt 108 im anderen Fall startet im Schritt 116 ein Zähler T, worauf im Schritt 118 die Fahrpedaländerung, der Fahrpedalgradient berechnet wird.

Im darauffolgenden Abfrageschritt 120 wird überprüft, ob der Fahrer eine Verzögerung des Fahrzeugs vorgenommen hat, das heißt ob der Gradient negativ oder die Bremse betätigt ist. Ist dies der Fall, folgt im Schritt 126 ein Nullsetzen der Marke. Darauf wird gemäß Schritt 108 der Sollwert gebildet. Im anderen Fall wird gemäß Abfrageschritt 122 überprüft, ob Kraftschluß vorhanden ist, das heißt ob der Triebstrang in Richtung Zug aus seiner in Richtung Schubbetrieb vorgespannten Stellung vorgespannt ist. Dies geschieht durch Überprüfung der Motordrehzahländerung zur Raddrehzahländerung. Dabei werden jeder Motordrehzahländerung für jede Gangstufe eine entsprechende Raddrehzahländerung zugeordnet. Fällt die Raddrehzahländerung nicht in der der jeweiligen Motordrehzahländerung zugeordneten Bereich, so ist davon auszugehen, daß kein vollständiger Kraftschluß vorhanden ist. In diesem Fall wird gemäß Schritt 124 der mitlaufende Zähler T auf seinen Maximalwert hin überprüft. Wurde jedoch ein vollständiger Kraftschluß erkannt, da die Radgeschwindigkeitsänderung der jeweiligen Motordrehzahländerung entspricht, wird im Schritt 126 die Marke auf Null gesetzt und im folgenden Schritt 108 der Drosselklappensollwert auf der Basis des Fahrpedalwerts ausgegeben. Ein redundantes Kriterium zur Kraftschlußerkennung gemäß Schritt 122 stellt der mitlaufende Zähler dar, welcher nach Übergang vom Schub- in den Zugbetrieb gestartet wird und der eine vorbestimmte Maximalzeitbedingung einführt, die dann greift, wenn die Kraftschlußerkennung aus irgendwelchen Gründen nicht funktioniert. Hat der Zähler seinen Maximalwert überschritten, so folgt Schritt 108, ist er unterhalb seines Maximalwerts, so wird im Schritt 127 die maximale Fahrpedaländerung als Funktion der eingelegten Gangstufe aus einer Kennlinie oder Tabelle ausgelesen und im darauffolgenden Abfrageschritt 128 überprüft, ob die im Schritt 118 gemessene Fahrpedalstellungsänderung größer ist als die für die eingelegte Getriebeübersetzung vorgegebene maximale Änderung. Ist dies nicht der Fall, folgt Schritt 108, überschreitet jedoch die Fahrpedaländerung die maximal vorgegebene Fahrpedalstellungsänderung, so besteht die Gefahr, daß Schwingungen im Triebstrang auftreten. In diesem Fall wird gemäß Schritt 130 die Änderungsgeschwindigkeit des Drosselklappensollwertes gemäß einer speziell eingerichteten, vorzugsweise gangabhängigen Kennlinie begrenzt, durch diese der Sollwert unabhängig vom aktuellen Fahrpedalwert einer vorbestimmten Zeitfunktion folgend in Richtung Öffnen gesteuert wird. Danach wird der Programmteil mit Schritt 118 wiederholt, bis Kraftschluß erkannt, die Maximalzeit überschritten wird oder der Fahrpedalgradient den Maximalwert unterschritten hat.

Neben der dargestellten Vorgehensweise nach Figur 3 kann als weiteres Kriterium zur Einleitung der Verzögerung der Ausführung des Fahrerwunsches die Kupplungsbetätigung herangezogen werden, wobei bei betätigter Kupplung keine Zeitverzögerung vorgenommen wird.

## Patentansprüche

1. Verfahren zur Steuerung einer Antriebseinheit eines Fahrzeugs, mit einem Stellelement (14, 16, 18) zur Beeinflussung der Leistung, welche auf der Basis des Fahrerwunsches (FP) eingestellt wird, wobei beim Übergang vom Schubbetrieb in den Zugbetrieb die Ausführung des Fahrerwunsches zur Einstellung der Leistung verzögert erfolgt, wenn die Fahrerwunschänderung (FṖ) einen maximalen Wert (FṖmax) überschreitet, dadurch gekennzeichnet, daß der maximale Wert (FṖmax) der Fahrerwunschänderung (FṖ) von den Übersetzungsverhältnissen (G) im Antriebsstrang abhängig ist.

2. Verfahren nach Anspruch 1, dadurch gekennzeichnet, daß die Leistung durch elektrische, hydraulische, pneumatische, etc. Einstellung des Stellelements auf der Basis des durch die Fahrpedalbetätigung erfaßten Fahrerwunsches eingestellt wird.

3. Verfahren nach einem der vorhergehenden Ansprüche, dadurch gekennzeichnet, daß beim Übergang vom Schub- in den Zugbetrieb die Verzögerung bis zum tatsächlichen Eintritt der Zugphase aktiv ist.

4. Verfahren nach Anspruch 3, dadurch gekennzeichnet, daß der tatsächliche Eintritt der Zugphase dann angenommen wird, wenn bei einer Motordrehzahländerung unter Berücksichtigung der Übersetzungsverhältnisse des Antriebsstrangs eine entsprechende Änderung der Radgeschwindigkeiten eines angetriebenen Rades erkannt wird.

5. Verfahren nach einem der vorhergehenden Ansprüche, dadurch gekennzeichnet, daß die Verzögerung der Ausführung des Fahrerwunsches bis zum Ablauf einer vorgegebenen Maximalzeit nach der Betätigung des Fahrpedals zum Verlassen des Schubbetriebs aktiv ist.

6. Verfahren nach einem der vorhergehenden Ansprüche, dadurch gekennzeichnet, daß auf der Basis von Motordrehzahl und Motortemperatur ein Stellungswert für das Leistungsstellelement vorgegeben ist, welcher der Überwindung der inneren Reibung von Antriebseinheit und Antriebsstrang entspricht und daß Schubbetrieb angenommen wird, wenn der erfaßte Stellungswert des Leistungsstellelements diesen Wert unterschreitet.

7. Verfahren nach Anspruch 3, dadurch gekennzeichnet, daß nach Erkennen des tatsächlichen Eintritts der Zugphase die Verzögerung der Ausführung des Fahrerwunsches gestoppt und das Leistungsstellelement entsprechend dem Fahrerwunsch eingestellt wird.

8. Verfahren nach Anspruch 5, dadurch gekennzeichnet, daß nach Ablauf der maximalen Zeit die Verzögerung der Ausführung des Fahrerwunsches gestoppt und das Leistungsstellelement entsprechend dem Fahrerwunsch eingestellt wird.

9. Verfahren nach einem der vorhergehenden Ansprüche, dadurch gekennzeichnet, daß bei Unterschreiten der maximalen Fahrerwunschänderung die Verzögerung der Ausführung des Fahrerwunsches gestoppt und das Leistungsstellelement entsprechend dem Fahrerwunsch eingestellt wird.

10. Verfahren nach einem der vorhergehenden Ansprüche, dadurch gekennzeichnet, daß die Verzögerung der Ausführung des Fahrerwunsches durch Steuerung eines Einstellwertes für das Leistungsstellelement gemäß einer vorgegebenen Zeitfunktion linear, exponentiell oder parabelförmig, etc. durchgeführt wird.

11. Vorrichtung zur Steuerung einer Antriebseinheit eines Fahrzeugs, mit einem die Antriebsleistung beeinflussenden Stellelement (12, 14, 16), mit einer Steuereinheit (20), welche das Stellelement entsprechend dem Fahrerwunsch (FP) einstellt, wobei die Steuereinheit (20) Mittel (64, 78, 66) umfaßt, welche beim Übergang vom Schubbetrieb in den Zugbetrieb die Ausführung des Fahrerwunsches (FP) zur Einstellung der Leistung verzögern, wenn die Fahrerwunschänderung (FṖ) einen vorgegebenen maximalen Wert (FṖmax) überschreitet, dadurch gekennzeichnet, daß die Steuereinheit (20) Mittel (78) umfaßt, welche den maximalen Wert der Fahrerwunschänderung (FṖmax) abhängig von den Übersetzungsverhältnissen (G) im Antriebsstrang festlegen.

## Claims

1. Method for controlling a drive unit of a vehicle, having a setting element (14, 16, 18) for influencing the power which is set on the basis of the driver's wishes (FP), on transition from overrun operation to traction operation the execution of the driver's wishes for setting the power taking place with a delay if the change (FṖ) in the driver's wishes exceeds a maximum value (FṖmax), characterized in that the maximum value (FṖmax) of the change (FṖ) in the driver's wishes depends on the transmission ratios (G) in the drive train.

2. Method according to Claim 1, characterized in that the power is set by electrical, hydraulic, pneumatic, etc. setting of the setting element on the basis of the driver's wishes recorded by the accelerator pedal actuation.

3. Method according to one of the preceding claims, characterized in that on transition from overrun to traction operation, the delay is active until the traction phase actually commences.

4. Method according to Claim 3, characterized in that the actual commencement of the traction phase is assumed when, in the case of an engine rotational speed change, a corresponding change in the wheel speeds of a driven wheel is recognized, taking account of the transmission ratios of the drive train.

5. Method according to one of the preceding claims, characterized in that the delay in the execution of the driver's wishes is active until a specified maximum time has elapsed after the actuation of the accelerator pedal in order to leave overrun operation.

6. Method according to one of the preceding claims, characterized in that on the basis of engine rotational speed and engine temperature, a position value for the power setting element is specified which corresponds to overcoming the internal friction of the drive unit and the drive train, and in that overrun operation is assumed when the recorded position value of the power setting element is less than this value.

7. Method according to Claim 3, characterized in that after recognition of the actual commencement of the traction phase, the delay in the execution of the driver's wishes is stopped and the power setting element is set to correspond with the driver's wishes.

8. Method according to Claim 5, characterized in that, after the maximum time has elapsed, the delay in the execution of the driver's wishes is stopped and the power setting element is set to correspond with the driver's wishes.

9. Method according to one of the preceding claims, characterized in that if the change in the driver's wishes is less than the maximum, the delay in the execution of the driver's wishes is stopped and the power setting element is set to correspond with the driver's wishes.

10. Method according to one of the preceding claims, characterized in that the delay in the execution of the driver's wishes is carried out by controlling a setting value for the power setting element in accordance with a specified time function, linear, exponential or parabolic, etc.

11. Appliance for controlling a drive unit of a vehicle, having a setting element (12, 14, 16) influencing the drive power, having a control unit (20) which sets the setting element to correspond with the driver's wishes (FP), the control unit (20) comprising means (64, 78, 66) which, on transition from overrun operation to traction operation, delay the execution of the driver's wishes (FP) for setting the power if the change (FṖ) in the driver's wishes exceeds a specified maximum value (FṖmax), characterized in that the control unit (20) comprises means (78) which prescribe the maximum value of the change (FṖmax) in the driver's wishes as a function of the transmission ratios (G) in the drive train.

## Revendications

1. Procédé de commande d'une unité motrice d'un véhicule comprenant un élément de réglage (14, 16, 18) influençant la puissance qui se règle à partir du souhait du conducteur (FP), et au passage du mode de poussée au mode de traction, l'exécution du souhait du conducteur produit de manière retardée l'établissement de la puissance, et si la variation du souhait du conducteur (FṖ) dépasse une valeur maximale (FṖmax),
caractérisé en ce que
la valeur maximale (FṖmax) de la variation du souhait du conducteur (FṖ), dépend des rapports de transmission (G) de la ligne de transmission.

2. Procédé selon la revendication 1,
caractérisé en ce que
la puissance est réglée sur la base du souhait du conducteur détecté par l'actionnement de la pédale d'accélérateur par réglage électrique, hydraulique, pneumatique, etc., de l'élément de réglage.

3. Procédé selon l'une quelconque des revendications précédentes,
caractérisé en ce qu'
au passage du mode de poussée au mode de traction, la décélération est active jusqu'à ce que s'établisse effectivement la phase de traction.

4. Procédé selon la revendication 3,
caractérisé en ce qu'
on suppose que l'on est passé effectivement en phase de traction si pour une variation de la vitesse de rotation du moteur en tenant compte des rapports de démultiplication de la' ligne de transmission, on détecte une variation correspondante de la vitesse de roue d'une roue entraînée.

5. Procédé selon l'une des revendications précédentes,
caractérisé en ce que
le retard de l'exécution du souhait du conducteur jusqu'à la fin d'une durée maximale prédéterminée après l'actionnement de la pédale d'accélérateur, est actif pour produire le mode de poussée.

6. Procédé selon l'une quelconque des revendications précédentes,
caractérisé en ce que
sur la base de la vitesse de rotation du moteur et de la température du moteur, on prédétermine une valeur de réglage de l'élément de réglage de puissance qui correspond au dépassement du frottement interne de l'unité d'entraînement et la ligne de transmission et en ce qu'on suppose que l'on est en mode de poussée si la valeur de position détectée pour l'élément de réglage de puissance passe en dessous de cette valeur.

7. Procédé selon la revendication 3,
caractérisé en ce qu'
après reconnaissance de l'arrivée effective de la phase de traction, on arrête la décélération de l'exécution du souhait du conducteur et on règle l'élément de réglage de puissance suivant le souhait du conducteur.

8. Procédé selon la revendication 5,
caractérisé en ce qu'
à la fin du temps maximum, on arrête le retard de l'exécution du souhait du conducteur et on règle l'élément de réglage de puissance en fonction du souhait du conducteur.

9. Procédé selon l'une quelconque des revendications précédentes,
caractérisé en ce qu'
en cas de dépassement par en dessous de la variation maximale du souhait du conducteur, le retard à l'exécution du souhait du conducteur est arrêté et l'élément de réglage de puissance est réglé selon le souhait du conducteur.

10. Procédé selon l'une quelconque des revendications précédentes,
caractérisé en ce que
la décélération de l'exécution du souhait du conducteur est effectuée par la commande d'une valeur de réglage de l'élément de réglage de puissance suivant une fonction de temps prédéterminée, de manière linéaire, exponentielle ou de forme parabolique.

11. Dispositif pour la commande d'une unité motrice d'un véhicule comprenant un élément de réglage (12, 14, 16) influençant la puissance d'entraînement, une unité de commande (20) réglant l'élément de réglage selon le souhait du conducteur (FP),
l'unité de commande (20) comprenant des moyens (64, 78, 66) qui au passage du mode de poussée vers le mode de traction, retardent la puissance pour exécuter le souhait du conducteur (FP) si la variation du souhait du conducteur (FṖ) dépasse une valeur maximale prédéterminée (FṖmax),
caractérisé en ce que
l'unité de commande (20) comprend des moyens (78) fixant dans la ligne de transmission, la valeur maximale de la variation du souhait du conducteur (FṖmax) en fonction des rapports de transposition.
